# EUROPEAN PATENT APPLICATION

(11) **EP 4 593 412 A1**
(43) Date of publication of application: **30.07.2025**
(21) Application number: 24153471.8
(22) Date of filing: 23.01.2024
(51) Int. Cl.: H04Q 11/00

(54) **OPTICAL NETWORK UNIT ACTIVATION IN A PASSIVE OPTICAL NETWORK**

(71) Applicant: Nokia Solutions and Networks Oy, 02610 Espoo (FI)
(72) Inventor: Sillis, Yannick, 2018 Antwerp (BE)
(74) Representative: IP HILLS NV

(57) **Abstract**

An optical line terminal (1), OLT, for a passive optical network (10), PON, configured to perform activation of an optical network unit (11), ONU, by performing the following steps: receiving a request for activation (110) from the ONU, the request comprising a serial number (210) of the ONU; obtaining a distinction tag (250) associated with the ONU; allocating an ONU identifier to the ONU based on a unique combination of the serial number and the distinction tag; and transmitting at least one message (150) comprising the ONU identifier and the serial number onto the PON, allowing the ONU to retrieve the ONU identifier from the at least one message based on the serial number and the distinction tag.

## Description

### Field of the Invention

The present invention generally relates to an optical line terminal, OLT, configured to perform ONU activation; an optical network unit, ONU, configured to perform ONU activation; and a method for performing ONU activation.

### Background of the Invention

Passive optical networks, PONs, provide telecommunication by use of fibre-optic technology. PONs have a one-to-multiple structure, wherein a central optical line terminal, OLT, services a plurality of optical network units, ONUs. The OLT and ONUs are connected via an optical distribution network, ODN, comprising passive elements, such as fibre-optic cables and passive optical splitters. Downstream communication, i.e. from OLT to ONUs, and upstream communication, i.e. from an ONU to the OLT, may be alternated due to the PON infrastructure providing a single channel for bidirectional communication. Communication is managed by the OLT by use of predefined protocols.

The collection of ONUs within a PON may vary over time. For example, ONUs may become out of service and/or new ONUs may be connected during set-up of the PON or at a later time. When a new ONU is installed, it is first physically connected to the PON and powered on. Thereafter, the ONU may need to be initialised before being able to participate in communication according to the protocols maintained by the OLT. To this end, the OLT may regularly initiate a process of ONU activation. During this process, communication parameters may be shared between the OLT and the new ONU, such as timing information and modulation parameters. Activation is necessary to allow a new ONU to operate in accordance with the active protocols of the PON and has thereby joined the PON.

During ONU activation, the OLT may assign an identifier to a prospective ONU to which it can refer later during communication. Determining an identifier is typically performed based on a serial number of the prospective ONU. A serial number may be provided by a vendor of the ONU, e.g. by pre-programming or by manual operation during installation.

### Summary of the Invention

According to some aspects, there is provided the subject matter of the independent claims. Some further aspects are defined in the dependent claims.

According to a first example aspect, an optical line terminal, OLT, for a passive optical network, PON, is configured to perform activation of an optical network unit, ONU by performing the following steps: receiving a request for activation from the ONU, the request comprising a serial number of the ONU; obtaining a distinction tag associated with the ONU; allocating an ONU identifier to the ONU based on a unique combination of the serial number and the distinction tag; and transmitting at least one message comprising the ONU identifier and the serial number onto the PON, allowing the ONU to retrieve the ONU identifier from the at least one message based on the serial number and the distinction tag.

In a PON, the OLT assigns an ONU identifier, also referred to as identifier, ONU ID, ONU-ID, or ID, to a prospective ONU during the activation process. The ONU identifier serves the purpose of allowing the OLT to individually address and recognise a corresponding associated ONU during later communication. For example, an ONU may be configured to only retain fragments of a downstream optical signal that commences with its identifier, e.g. have the identifier in a header section of a downstream frame. Analogously, upstream communication may be organised according to a time-division multiplexing scheme, wherein an upstream timeslot is attributed to a particular ONU by use of its identifier. The OLT may regularly communicate such a scheme to the ONUs during downstream transmission, as it may change over time. An ONU identifier stays associated with a particular ONU until the ONU is no longer activated, e.g. if the OLT disables the ONU.

Each ONU is provided with a serial number, e.g. by a vendor of the ONU. A typical OLT is configured to allocate an identifier to an ONU based on its serial number, received in a request for activation. The OLT maps an ONU serial number onto an ONU identifier. The OLT informs an ONU of its assigned ONU identifier by transmitting a message on the PON comprising the ONU identifier and the serial number to the ONUs. As the transmission medium is shared, all ONUs may read the message. Yet, only the ONU having the corresponding serial number may recognise its serial number in the at least one message and may thus retain the identifier. The at least one message may, for example, comprise at least one Physical Layer Operation, Administration and Maintenance, PLOAM, message according to known standards issued by the International Telecommunication Union, ITU. Likewise, the request for activation may, for example, comprise at least one PLOAM message.

Occasionally, serial numbers are not unique. For example, duplicate serial numbers may exist within a PON by accident during fabrication or installation of an ONU. As another example, a malicious ONU may sniff a legitimate serial number by overhearing downstream communication. Thereafter, the malicious ONU may pose as the legitimate ONU by communicating the same serial number to the OLT, i.e. conduct spoofing. Performance and privacy issues may also arise when at least two ONUs communicate the same serial number to the OLT during activation. The OLT maps an assumingly unique serial number to a unique identifier and may not be able to distinguish between ONUs having the same serial number. The OLT may refrain from assigning the same ONU identifier to multiple ONUs having the same serial number, to avoid confusion during further communication. The OLT may, for example, discard the first ONU. Then, the OLT only maintains communication based on the identifier of the last ONU having communicated the serial number. As a result, only one of the two ONUs may be active in the PON. The other one may no longer be able to participate in the communication PON. This may be exploited by a malicious ONU.

The distinction tag may also be referred to as ONU identifier assignment tag, ONU-ID assignment tag, identifier assignment tag, ID assignment tag, or ONU-ID distinction tag. The distinction tag can be seen as a label providing additional information to the request for activation message sent by an ONU. The distinction tag may also be referred to as a security tag or control tag as it allows distinguishing between ONUs having a same serial number. The distinction tag may be inserted in a field of the request for activation message. The distinction tag is of use during activation and deactivation of an ONU. After an ONU identifier is assigned by the OLT, the distinction tag may not need to be included in further regular communication, similar to the serial number.

The distinction tag forms a unique combination along with the serial number, thereby allowing to uniquely identify an ONU by the distinction tag and the serial number. If two ONUs have the same serial number yet a different distinction tag, both ONUs are attributed a different ONU identifier by the OLT. Coincidentally, two ONUs may have the same distinction tag. The distinction tag may not be unique for all ONUs in the PON. If the ONUs with the same tag have a different serial number, the OLT can still separately identify them, and they will be allocated a unique identifier. The set of the distinction tag and the serial number may be unique with respect to other ONUs in the PON. The combination of serial number and distinction tag as a whole determines that an ONU receives an ONU identifier and cannot be confused with another ONU by the OLT. In other words, the OLT performs a one-to-one mapping of the serial number and distinction tag taken together, to a single ONU identifier. The distinction tag is applied such that no two ONUs that are being activated may have the same serial number and the same distinction tag.

Applying the distinction tag allows the OLT to overcome its inability to handle two or more ONUs having the same serial number within the PON. By applying the distinction tag, each ONU may be allocated a unique identifier, enabling the OLT to service all ONUs. In a case of accidental duplication, the distinction tag prevents that one of the legitimate ONUs becomes excluded from the PON. It is a further advantage that no changes need to be made to further processes in the PON that follow activation according to existing protocols. After activation, the OLT does not need to incorporate the use of the distinction tag during further data communication. The distinction tag also enables preventing a malicious ONU from impersonating a legitimate ONU and from denying the legitimate ONU access to the PON. This may further provide protection against denial-of-service, DOS, attacks.

According to further example embodiments, the at least one message is an Assign_ONU-ID message according to the International Telecommunication Union, ITU, G.984.3, G.987.3, G.9807.1, G.989.3, and/or G.9804.2 standard.

By applying the Assign_ONU-ID message according to existing protocols, the OLT is compatible with existing PONs. Changes for implementing the OLT according to the first example aspect may be applied without a need for structural alterations to a PON.

According to further example embodiments, the OLT is further configured to perform a step of encrypting at least the ONU identifier before transmitting the at least one message onto the PON.

According to further example embodiments, the OLT is further configured to perform a step of encrypting at least the ONU identifier and the serial number before transmitting the at least one message onto the PON.

Encrypting the ONU identifier, optionally along with the serial number, highly complicates sniffing compared to communicating the ONU identifier and optionally the serial number in plain text. Malicious ONUs may then still be able to overhear traffic destined for other ONUs, yet may not be able to decipher the ONU identifier and optionally the serial number.

According to further example embodiments, the OLT is further configured to perform a step of encrypting the ONU identifier, the serial number, and the distinction tag.

To further impede malicious ONUs from obtaining a valid ONU ID from a legitimate ONU, the distinction tag may also be taken into account during encryption. For example, the ONU identifier, the serial number and the distinction tag may be concatenated into a single value, followed by an encryption step of the concatenation, i.e. the single value.

According to further example embodiments, the step of encrypting comprises encrypting the serial number and the ONU identifier using the distinction tag as an encryption key.

Advantageously, the distinction tag may be used as an encryption key, thereby providing an efficient implementation for performing an encryption algorithm by the OLT.

According to further example embodiments, the step of encrypting comprises applying an Advanced Encryption Standard, AES.

AES being a well-known efficient encryption algorithm, the OLT may implement the encryption while needing limited computational power. For example, AES-128, i.e. the AES algorithm using a 128-bit long key, may be applied. The AES algorithm may be implemented by encrypting a concatenation of the identifier, serial number and distinction tag using a key that may be known to both the OLT and the ONU. Alternatively, a concatenation of the identifier and the serial number may be encrypted with AES using the distinction tag as a key. In that case, the distinction tag serves a dual purpose: allowing the OLT to handle duplicate serial numbers and serving as an encryption key to improve security. When using AES-128, the distinction tag would be 128 bits long.

According to further example embodiments, the distinction tag is pre-shared between the OLT and the ONU.

The distinction tag may be provided to both the OLT and a prospective ONU, e.g. during installation of the prospective ONU. By sharing the distinction tag in advance, the distinction tag does not need to be sent over the PON. As such, possible sniffing of the distinction tag is advantageously avoided. The distinction tag is needed for determining, by the OLT, and obtaining, by the prospective ONU, the identifier of the prospective ONU. Therefore, a malicious ONU may not be able to extract the identifier merely by sniffing. Advantageously, the pre-shared distinction tag may be used as encryption key for encrypting the identifier and, optionally, the serial number. The pre-shared distinction tag may, for example, be the pre-shared key, PSK, that is used for secure authentication.

According to further example embodiments, the request for activation further comprises the distinction tag; the distinction tag is determined by the ONU; and the at least one message further comprises the distinction tag.

The distinction tag may be determined by the ONU and thereafter transmitted, by the ONU, over the PON, e.g. in the request for activation message. Alternatively, the distinction tag may be sent in a separate message by the ONU. Accordingly, the OLT may be configured to include the distinction tag in the at least one response message to the ONU. This enables an ONU to determine whether the identifier in the response message corresponds to it by verifying the serial number and distinction tag.

According to further example embodiments, transmitting the Assign_ONU-ID message comprises including the distinction tag within padded bytes of the Assign_ONU-ID message.

The Assign_ONU-ID message may hold padded bits in bytes 16 to 40 as defined by the ITU. These designated bits may be utilised for holding the distinction tag in a standard Assign_ONU-ID message.

According to further example embodiments, the OLT may be further configured to perform a step of authenticating the ONU after transmitting the at least one message using the ONU identifier.

The authenticating may, for example, be performed by applying the Registration-ID protocol, the Logical ONU-ID protocol, the Optical Network Unit Management Control Interface, OMCI, secure mutual authentication protocol and/or the 802.1x secure mutual authentication protocol. Advantageously, applying a mutual authentication protocol may increase security.

Applying the distinction tag enables detecting of malicious ONUs in a further step of authentication. Because the identifiers are uniquely assigned by use of the distinction tag, the issue with duplicate serial numbers does not apply anymore after activation. Subsequently applying an authentication algorithm may aid in detecting malicious ONUs and denying them access to the PON.

According to a second example aspect, there is provided an optical network unit, ONU, for a passive optical network, PON, configured to perform activation in the PON. The ONU has a distinction tag. The ONU is configured to perform the following steps: transmitting a request for activation onto the PON to an optical line terminal, OLT, the request comprising a serial number of the ONU; receiving at least one message from the OLT, the at least one message comprising the serial number and an ONU identifier allocated, by the OLT, to the ONU based on a unique combination of the distinction tag and the serial number; and retrieving the ONU identifier from the at least one message based on the serial number and the distinction tag.

The ONU according to the second example aspect is configured to perform activation by interacting with the OLT according to the first example aspect to join the PON. Such an ONU may provide one or more of the above-mentioned advantages.

According to further example embodiments, the request for activation is a Serial_Number_ONU message according to the ITU G.984.3, G.987.3, G.9807.1, G.989.3, and/or G.9804.2 standard.

By applying the Serial_Number_ONU message according to existing protocols, the ONU is compatible with existing PONs.

According to further example embodiments, the retrieving comprises decrypting at least the ONU identifier and the serial number.

In accordance with an encrypting step performed by the OLT according to the first example aspect, the ONU may decrypt the ONU identifier, optionally along with the serial number. Advantageously, this may avoid sniffing. Malicious ONUs may still be able to overhear traffic destined for other ONUs. Only the ONU knowing the serial number and distinction tag is able to decipher the ONU identifier.

According to further example embodiments, the distinction tag is pre-shared between the OLT and the ONU.

According to further example embodiments, the ONU is further configured to determine the distinction tag, and the request for activation further comprises the distinction tag.

According to further example embodiments, determining the distinction tag comprises determining the distinction tag as a random number.

The ONU may, for example, be configured to implement a pseudorandom generator in order to generate the distinction tag. In this example, the distinction tag may also be referred to as a random tag.

According to further example embodiments, the distinction tag is included in a Random_Delay field of the Serial_Number_ONU message.

The Random_Delay field is reserved for holding a, by the ONU randomly generated, delay according to ITU standards. This random delay is typically used during the ranging process. The field may be used to place the distinction tag within the Serial_Number ONU message. This may be done instead of the random delay, or, the random delay may advantageously be used as the distinction tag. Using the Random_delay field may advantageously result in excellent compatibility with existing protocols.

According to a third aspect, a method is provided for performing activation of an optical network unit, ONU, in a passive optical network, PON, wherein the ONU has a serial number and a distinction tag. The method comprises the following steps: transmitting, by the ONU, a request for activation to an optical line terminal, OLT, within the PON, the request comprising the serial number; receiving, by the OLT, the request for activation from the ONU; obtaining, by the OLT, the distinction tag associated with the ONU; allocating, by the OLT, an ONU identifier to the ONU based on a unique combination of the serial number and the distinction tag; transmitting, by the OLT, at least one message comprising the ONU identifier and the serial number onto the PON; receiving, by the ONU, the at least one message from the OLT; and retrieving, by the ONU, the ONU identifier from the at least one message based on the serial number and the distinction tag.

### Brief Description of the Drawings

Fig. 1 illustrates an OLT and an ONU according to example embodiments;
Fig. 2 illustrates a method for performing ONU activation according to example embodiments;
Fig. 3 illustrates a method for performing ONU activation according to example embodiments;
Fig. 4 illustrates a method for performing ONU activation according to example embodiments; and
Fig. 5 illustrates messages for performing ONU activation according to example embodiments.

### Detailed Description of Embodiment(s)

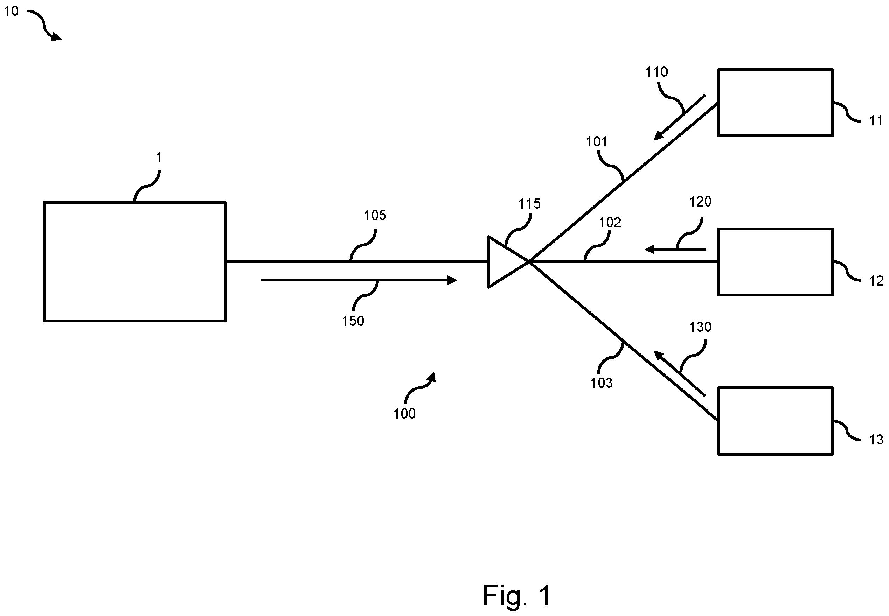

The present disclosure relates to performing optical network unit, ONU, activation in a passive optical network, PON. The ONU device at a user side of the PON may also be referred to as optical network terminal, ONT. Figure 1 shows a schematic block diagram of an example passive optical network, PON 10 comprising an optical line terminal, OLT, 1 connected to a plurality of optical network units, ONUs, 11, 12, 13 via an optical distribution network, ODN 100. The ODN 100 may have a tree structure comprising an optical feeder fibre 105, one or more passive optical splitters/multiplexers 115, and a plurality of optical distribution fibres or drop fibres 101, 102, 103 that connect the splitter/multiplexer 115 to the respective ONUs 11, 12, 13. In the downstream direction, the passive optical splitter/multiplexer 115 splits an optical signal coming from the OLT 1 into lower power optical signals for the connected ONUs 11, 12, 13, while in the upstream direction, the passive optical splitter/multiplexer 115 multiplexes the optical signals coming from the connected ONUs 11, 12, 13 into a burst signal for the OLT 1. In this example, the OLT 1 is connected to three ONUs 11, 12, 13, however, the OLT 1 may be connected to fewer or more ONUs.

The passive optical network 10 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 10 may implement time-division multiplexing, TDM, or time- and wavelength-division multiplexing, TWDM. In time-division multiplexing, TDM, the telecommunication medium 105 is shared in time between the ONUs 11, 12, 13 during upstream communication.

The OLT 1 is configured to receive a request for activation 110, 120, 130 from the ONUs 11, 12, 13. The requests 110, 120, 130 comprise a serial number of ONUs 11, 12, 13 respectively. Each ONU 11, 12, 13 may be provided with a vendor-identifier and a vendor-specific serial number, VSSN, that are usually unamendable after installation. The serial number may, for example, be a concatenation of the vendor identification number and the vendor-specific serial number.

To perform activation of an ONU, e.g. ONU 11, the OLT 1 is configured to obtain a distinction tag associated with the ONU 11. The OLT is further configured to allocate an ONU identifier to the ONU 11 based on a unique combination of the serial number and the distinction tag. The ONU identifier may be chosen, e.g. randomly, from a pool of possible ONU identifiers available to the OLT. When allocating an ONU identifier, the OLT 1 may only select an ONU identifier from such a pool that is not yet in use. Alternatively, ONU identifier assignment may be configured by an operator of the PON. The OLT 1 is further configured to transmit at least one message 150 onto the PON 10 over the ODN 100. The at least one message 150 comprises the ONU identifier and serial number corresponding to ONU 11. The ONU 11 may subsequently retrieve its ONU identifier from the at least one message 150 based on the serial number and the distinction tag.

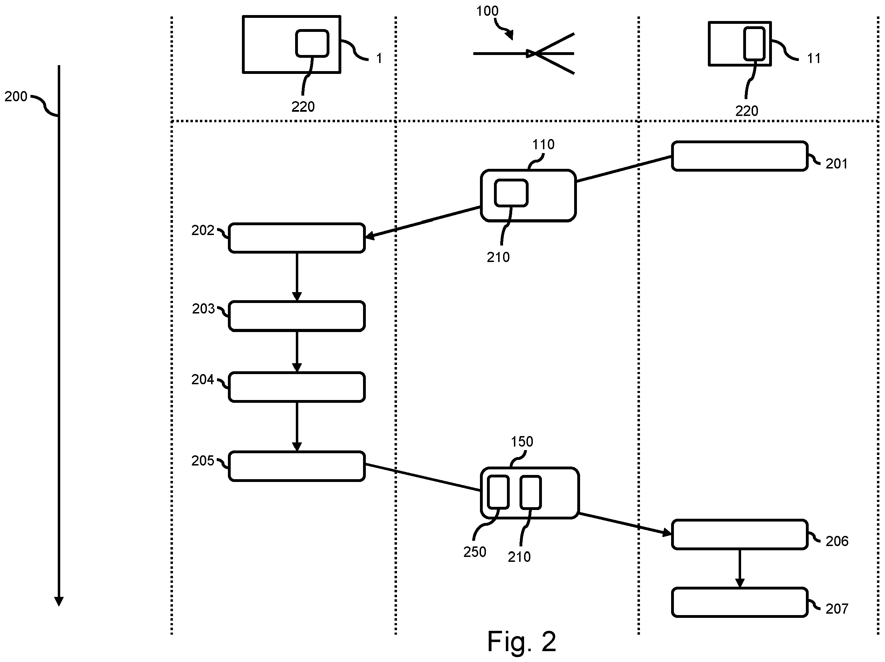

Figure 2 shows a schematic view of the OLT 1 and the ONU 11 and the steps that may be performed by the OLT 1 and the ONU 11. To the left of Figure 2, a time axis 200 is depicted, illustrating an example order in which the steps may be performed. In the example of Figure 2, the OLT 1 and the ONU 11 have access to a pre-shared distinction tag 220. This is illustrated by the distinction tag 220 inside of the OLT 1 and ONU 11 in Figure 2. It will be apparent that, optionally, the OLT 1 and the ONU 11 may be required to obtain the distinction tag 220 prior to activation. The distinction tag 220 may be programmed or provisioned into the OLT 1 and/or the ONU 11, e.g. upon installation by an operator.

In step 201, the ONU 11 transmits the request for activation 110 to the OLT 1 via the ODN 100. The request for activation comprises the serial number 210. The request 110 is received by the OLT 1 in step 202. In step 203, the OLT 1 allocates the ONU identifier 250 to the ONU 11 based on the unique combination of serial number 210 and distinction tag 220 pertaining to the ONU 11. In this example, step 204 is performed thereafter and comprises encrypting the serial number 210, and the identifier 250 using the distinction tag 220 as an encryption key, e.g. using AES-128, AES-192 or AES-256. In step 205, the serial number 210 and the identifier 250 are transmitted in a message 150 over the ODN 100 to the ONU 11. In step 206, the ONU 11 receives the message 150. In this example, in accordance with step 204, step 207 is performed thereafter. Step 207 comprises decrypting the message 150 using the pre-shared distinction tag 220. The ONU 11 checks if the message 150 comprises the serial number 210 of the ONU 11. After confirming the serial number, ONU 11 may conclude that the identifier 250 was assigned to ONU 11. Other ONUs 12, 13 are not able to decrypt the message 150 correctly since they do not know the distinction tag 220. Therefore, it is impossible for other ONUs 12, 13 in the PON 10 to obtain the identifier 250 corresponding to ONU 11.

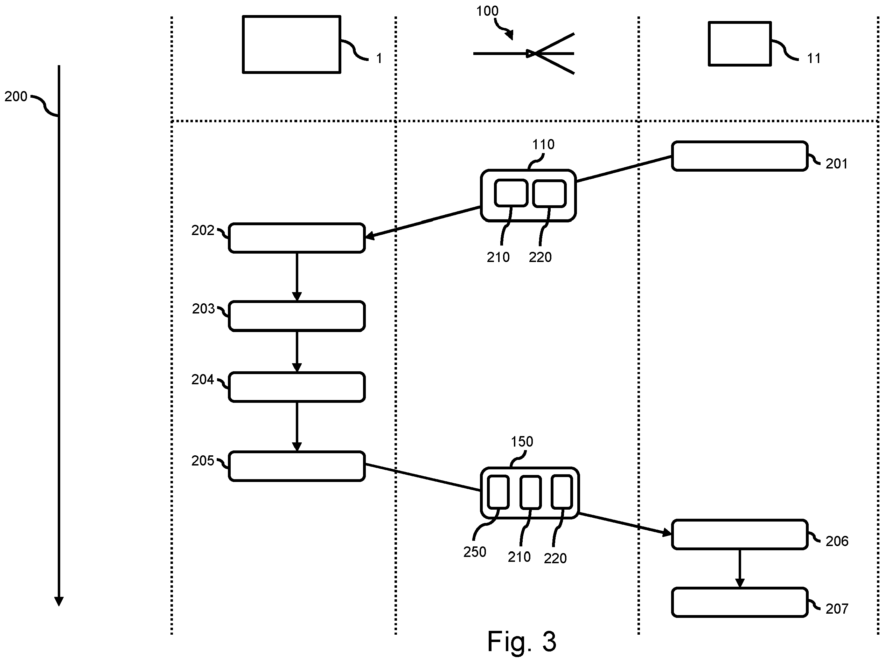

Figure 3 shows a schematic view of the OLT 1 and the ONU 11 and the steps that are performed by the OLT 1 and the ONU 11 according to another example embodiment. To the left of Figure 3, the time axis 200 is again depicted, illustrating an example order in which the steps may be performed. In the example of Figure 3, the ONU 11 determines the distinction tag 220. The distinction tag 220 can be stipulated, e.g. preprogrammed or generated, by using a pseudorandom generator in the ONU 11. The OLT 1 does not know the distinction tag 220 corresponding to ONU 11 prior to receiving an activation request 110 from ONU 11.

With reference to Figure 3, in step 201, the ONU 11 transmits the request for activation 110 to the OLT 1 via the ODN 100. The request for activation comprises the serial number 210 and the distinction tag 220. The request 110 is received by the OLT 1 in step 202. In step 203, the OLT 1 allocates an ONU identifier 250 to the ONU 11 based on the unique combination of the serial number 210 and distinction tag 220 pertaining to the ONU 11. In the example of Figure 3, step 204 is performed by the OLT 1 comprising encrypting a concatenation of the serial number 210, the identifier 250 and the distinction tag 220, e.g. using AES-128, AES-192 or AES-256. It will be apparent that including the distinction tag 220 in the concatenation is optional. Encrypting may be performed using a key that is known to both OLT 1 and ONU 11 in advance. Alternatively, encrypting may be done by applying a reversible function to the concatenation, wherein the ONU 11 knows the reversible function. It will be apparent that the encryption step is optional, and other cryptographic schemes may be deployed. In addition, only parts of the information may be encrypted, e.g. only the identifier 250. In step 205, the encrypted concatenation of serial number 210, identifier 250 and distinction tag 220 is transmitted in message 150 over the ODN 100 to the ONU 11. In step 206, the ONU 11 receives the message 150. In this example, in accordance with step 204, step 207 is performed thereafter. Step 207 comprises decrypting the message 150 thereby extracting the concatenation of serial number 210, identifier 250 and distinction tag 220. The ONU 11 checks if the message 150 comprises the serial number 210 and the distinction tag 220 belonging to ONU 11. After confirming the presence of the serial number 210 and the distinction tag 220 in the message 150, ONU 11 may conclude that the identifier 250 was assigned to ONU 11. Other ONUs 12, 13 may not able to decrypt the message 150. It is noted that if the concatenation of the serial number 210, distinction tag 220 and identifier 250 was transmitted in plain text, other ONUs 12, 13 are configured to ignore the message 150 after confirming that the combination of serial number 210 and distinction tag 220 does not match their own.

According to another example embodiment, the distinction tag 220 is sent with the request 110 as depicted in the example embodiment of Figure 3. Further, the distinction tag 220 may comprise a 4-time repetition of the value of the random delay applied for ranging. The OLT may determine a distance to an ONU based on travel time using timestamps. An ONU may apply the random delay when sending the Serial_Number_ONU message to the OLT while sending its value along with it in the Random_Delay field. The OLT may then recover the random delay and take it into account to determine the actual travel time to the ONU. The use of the random delay in the ranging process is to avoid Serial_Number_ONU messages to arrive simultaneously at the OLT, since ONUs may be located at a same distance from the OLT. The 32-bit random delay field yields a 128-bit number when subsequently repeated four times. In the encryption step 204, this 128-bit number is used as encryption key to encrypt a concatenation of the identifier 250 and the serial number 210 using AES-128.

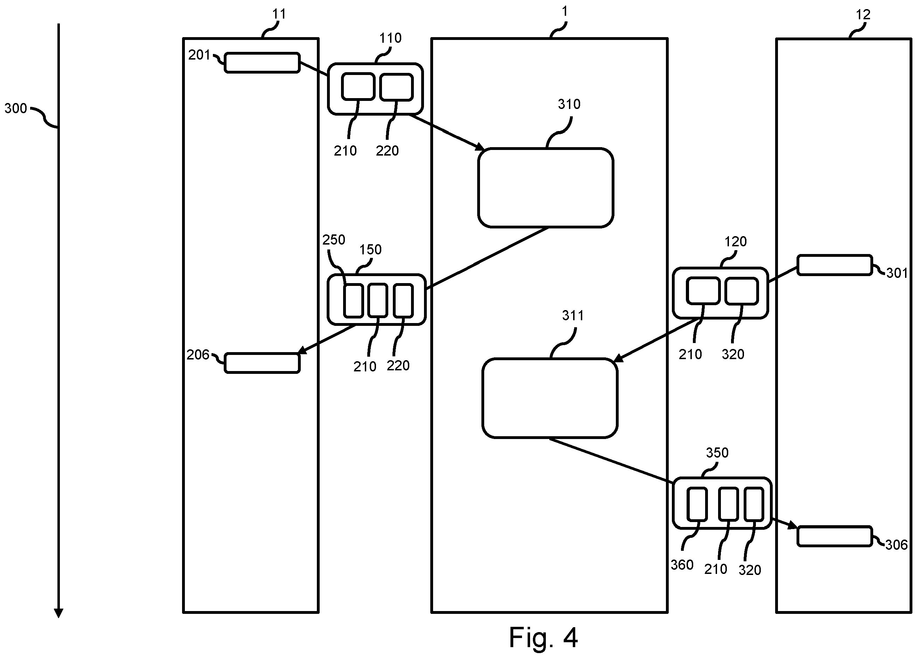

Turning to Figure 4, a schematic view is shown illustrating an example embodiment of subsequent activation of ONU 11 and ONU 12. Figure 4 conceptually shows an interaction of the OLT 1 with ONUs 11, 12. To the left of Figure 4, a time axis 300 is depicted, illustrating an example order in which illustrated steps may be performed. In step 201, the ONU 11 transmits a request for activation 110 to the OLT 1 via the ODN 100. The request for activation comprises the serial number 210 and the distinction tag 220. Step 310, performed by the OLT 1, comprises steps 202, 203 and 205 as described above. Optionally, step 204 may also be included as described above. In step 205, the OLT 1 responds to ONU 11 with the at least one message 150 comprising the serial number 210, the distinction tag 220 and the ONU identifier 150. In step 206, the ONU 11 receives the message 150. Thereafter, ONU 11 may perform subsequent steps 206, 207 to extract the ONU identifier 150 as explained above. In the meantime, in step 301, another ONU 12 also transmits a request for activation 120 to the OLT 1 via the ODN 100. The request for activation 120 comprises the serial number 210 and the distinction tag 320 associated with ONU 12. The serial number 210 of ONU 12 is identical to the serial number 210 of ONU 11. The distinction tag 320 of ONU 12 is distinct from the distinction tag 220 of ONU 11. A step 311, performed by the OLT 1, comprises steps 202, 203 and 205 as described above performed for ONU 12, i.e. using serial number 210 and distinction tag 320. Optionally, step 204 may also be performed as described above. Because the pair (210, 320) is different from the pair (210, 220), the OLT 1 is able to distinguish between the ONUs 11 and 12 even though they have the same serial number 210. The OLT 1 will thus assign a different ONU identifier 360 to the ONU 12 than identifier 250 previously assigned to ONU 11. The OLT 1 responds to ONU 12 with the at least one message 350 comprising the serial number 210, the distinction tag 320 and the ONU identifier 360. In step 306, the ONU 12 receives the message 350. Thereafter, ONU 12 may perform subsequent steps 206, 207 to extract the ONU identifier 360 as explained above. It is noted that according to existing ITU-T standards, ONUs are only meant to send the request for activation once, thereby avoiding possible assigning of more than one identifier to a same ONU.

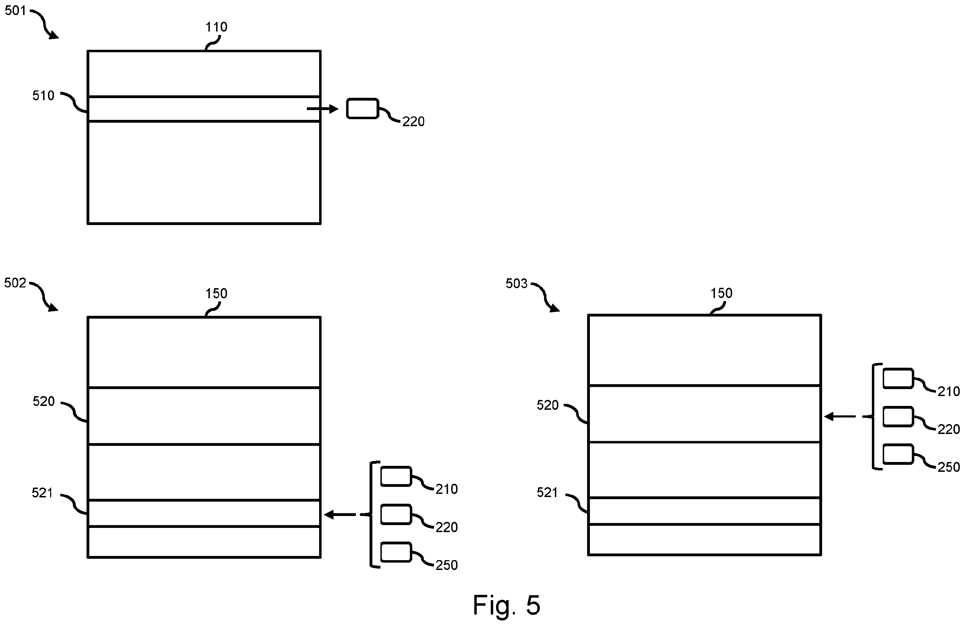

Figure 5 shows subplots 501, 502, 503. Subplot 501 schematically depicts a Serial_Number_ONU message. Bytes 13 to 16, indicated by reference numeral 510, of the Serial_Number_ONU message are reserved for the Random_delay used during ranging. The field can be filled with the distinction tag 220, or, the random delay value can itself be used as distinction tag 220. The Serial_Number_ONU message may comprise 48 bytes, wherein other bytes (not shown) are reserved for other purposes. For example, according to the ITU G.9804.2 standard, bytes 17 and 18 are reserved for a correlation tag for the purpose of distinguishing between messages sent by a same ONU at different wavelengths and/or different power levels. This is applicable in wave division multiplexing, WDM, PONs and/or when power levels of messages are used for additional multiplexing. This correlation tag is an event marker, i.e. added to a message in order to allow differentiating of messages at a receiving end.

Subplots 502 and 503 schematically depict the Assign_ONU-ID message. Bytes 5 and 6 are reserved for the ONU-ID. Bytes 7 to 10 are reserved for the Vendor_ID. Bytes 11 to 14 are reserved for a vendor-selected serial number, VSSN. Bytes 5 to 14 are indicated by reference numeral 520. Bytes 16 to 40 are reserved for padding bits and are indicated by reference numeral 521. According to an example embodiment, the serial number 210, identifier 250 and optionally distinction tag 220 can be included in the message 250 as padded bits, as illustrated in subplot 502. According to another example embodiment, the serial number 210, identifier 250 and optionally distinction tag 220 can be included as bytes 520 in the message 250, as illustrated in subplot 503.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical line terminal (1), OLT, for a passive optical network, PON, configured to perform activation of an optical network unit (11), ONU, by performing the following steps:
- receiving (202) a request (110) for activation from the ONU, the request comprising a serial number (210) of the ONU;
- obtaining a distinction tag (220) associated with the ONU;
- allocating (203) an ONU identifier (250) to the ONU based on a unique combination of the serial number and the distinction tag; and
- transmitting (205) at least one message (150) comprising the ONU identifier and the serial number onto the PON, allowing the ONU to retrieve the ONU identifier from the at least one message based on the serial number and the distinction tag.

2. The OLT according to claim 1, wherein the at least one message is an Assign_ONU-ID message according to the International Telecommunication Union, ITU, G.984.3, G.987.3, G.9807.1, G.989.3, and/or G.9804.2 standard.

3. The OLT according to claim 1 or 2, further configured to perform a step of encrypting (204) at least the ONU identifier and the serial number before transmitting the at least one message onto the PON.

4. The OLT according to claim 3, wherein the step of encrypting comprises encrypting the serial number and the ONU identifier using the distinction tag as an encryption key.

5. The OLT according to claim 3 or 4, wherein the step of encrypting comprises applying an Advanced Encryption Standard, AES.

6. The OLT according to any one of the preceding claims, wherein the distinction tag is pre-shared between the OLT and the ONU.

7. The OLT according to any one of claims 1-5, wherein the request for activation further comprises the distinction tag, and wherein the distinction tag is determined by the ONU; and wherein the at least one message further comprises the distinction tag.

8. The OLT according to claim 2 and 7, wherein transmitting the Assign_ONU-ID message comprises including the distinction tag within padded bytes (421) of the Assign_ONU-ID message.

9. An optical network unit, ONU, for a passive optical network, PON, configured to perform activation in the PON; wherein the ONU has a distinction tag; and wherein the ONU is configured to perform the following steps:
- transmitting a request for activation onto the PON to an optical line terminal, OLT, the request comprising a serial number of the ONU;
- receiving at least one message from the OLT, the at least one message comprising the serial number and an ONU identifier allocated, by the OLT, to the ONU based on a unique combination of the distinction tag and the serial number; and
- retrieving the ONU identifier from the at least one message based on the serial number and the distinction tag.

10. The ONU according to claim 9, wherein the request for activation is a Serial_Number_ONU message according to the ITU G.984.3, G.987.3, G.9807.1, G.989.3, and/or G.9804.2 standard.

11. The ONU according to claim 9 or 10, wherein the retrieving comprises decrypting (207) at least the ONU identifier and the serial number.

12. The ONU according to any one of claims 9-11, wherein the distinction tag is pre-shared between the OLT and the ONU.

13. The ONU according to any one of claims 9-11, further configured to determine the distinction tag, and wherein the request for activation further comprises the distinction tag.

14. The ONU according to claim 13, wherein determining the distinction tag comprises determining the distinction tag as a random number.

15. The ONU according to claims 13 or 14, wherein the distinction tag is included in a Random_Delay field (410) of the Serial_Number_ONU message.
